# EUROPÄISCHE PATENTSCHRIFT

(11) **EP 1 586 143 B1**
(45) Veröffentlichungstag und Bekanntmachung des Hinweises auf die Patenterteilung: **15.09.2010**
(21) Anmeldenummer: 04703770.0
(22) Anmeldetag: 21.01.2004
(51) Int. Cl.: H01S 3/067

(54) **FASER-LASER**
FIBRE LASER
LASER A FIBRE

(30) Priorität: 21.01.2003 DE 10302031
(43) Veröffentlichungstag der Anmeldung: 19.10.2005
(73) Patentinhaber: Universität Hamburg, 20355 Hamburg (DE)
(72) Erfinder: BAEV, Valery, 22559 Hamburg (DE); SALEWSKI, Stefan, 21680 Stade (DE); STARK, Arnold, 20259 Hamburg (DE); TOSCHEK, Peter, E., 20149 Hamburg (DE)
(74) Vertreter: von Kreisler Selting Werner
(86) Internationale Anmeldenummer: PCT/EP2004/000443
(87) Internationale Veröffentlichungsnummer: WO 2004/066456

(56) Entgegenhaltungen:
- WO-A-01/99243
- US-A- 4 680 767
- HSU K ET AL: "SINGLE-MODE TUNABLE ERBIUM:YTTERBIUM FIBER FABRY-PEROT MICROLASER" OPTICS LETTERS, OPTICAL SOCIETY OF AMERICA, WASHINGTON, US, Bd. 19, Nr. 12, 15. Juni 1994 (1994-06-15), Seiten 886-888, XP000449515 ISSN: 0146-9592
- STONE J ET AL: "PIGTAILED HIGH-FINESSE TUNABLE FIBRE FABRY-PEROT INTERFEROMETERS WITH LARGE, MEDIUM AND SMALL FREE SPECTRAL RANGES" ELECTRONICS LETTERS, IEE STEVENAGE, GB, Bd. 23, Nr. 15, 16. Juli 1987 (1987-07-16), Seiten 781-783, XP000560577 ISSN: 0013-5194

## Beschreibung

Die Erfindung betrifft einen Faserlaser mit gleichzeitiger bzw. umschaltbare Lichtemission in mehreren Spektralbereichen.

Bei einem Faser-Laser ist das laseraktive Medium in einen Lichtwellenleiter eingebunden. Laseraktivität der Faser wird insbesondere erzielt, indem der Faserkern mit Ionen Seltener Erden dotiert wird. Für zahlreiche Laserübergänge von Selten-Erden-Ionen konnte Laseremission erstmals in Faser-Lasern beobachtet werden, insbesondere seit als Wirtsmaterial neben Silikatgläsern auch Fluoridgläser, vor allem Fluorzirkonatglas ZBLAN, genutzt werden.

Die Anregung der Ionen erfolgt über eine Pumplichtquelle zur Erzeugung von in die Faser einzukoppelndem Pumplicht. Das Pumplicht wird longitudinal in die Faser eingestrahlt, so dass es von den Ionen absorbiert wird. Dabei wird das Pumplicht auf die Stirnfläche der Faser mit Hilfe einer Linse fokussiert, in den Faserkern eingekoppelt und dort geführt.

Ein derartige Faser-Laser ist beispielsweise aus DE 196 36 236 A1 bekannt. Der hierin beschriebene Viel-Moden-Wellenleiterlaser weist als Pumplaser einen Diodenlaser auf. Mit Hilfe einer Kollimationsoptik wird das von dem Diodenlaser abgegebene Licht an der Eintrittsseite der Faser in diese eingekoppelt. Ein Spiegel ist auf die Eintrittsseite der Faser aufgebracht. Für die durch den Diodenlaser erzeugte Pumpwellenlänge ist der Spiegel nur sehr gering reflektierend. Durch den Spiegel an der Eintrittsseite wird jedoch das in der Faser erzeugte Licht gut reflektiert. Das gegenüberliegende Faserende, die Austrittsseite der Faser, reflektiert das erzeugte Licht nur sehr schwach. Um in der Faser erzeugtes Licht wieder in die Faser effektiv zurück zu koppeln, ist in einem Abstand zu der Austrittsseite der Faser ein Spiegel angeordnet. Das von diesem Resonatorspiegel reflektierte Licht wird mit Hilfe einer zwischen der Austrittsseite der Faser und dem Resonatorspiegel angeordneten Linse fokussiert und in die Faser wieder eingekoppelt.

Zahlreiche praktische Anwendungen wie z.B. konfokale Mikroskopie, optische Datenspeicherung und Laser-Displays benötigen effiziente, zuverlässige, kompakte und kostengünstige kohärentes Lichtquellen, die auf Emissionswellenlängen im sichtbaren Bereich emittieren. Die passenden Lichtquellen dafür sind diodenlaser-gepumpte Aufkonversions-Faserlaser. Ein solcher Faser-Laser ist aus US 5727007 bekannt. Die Nachteile dieses Faser-Lasers bestehen darin, dass er nur in einem ausgewählten Spektralbereich emittieren kann und zwei verschiedene Laserdioden als Pumpquellen erfordert.

Eine geeignete Lichtquelle für die oben genannten Anwendungen ist aus WO 01/99243 A1 bekannt. Der hierin beschriebene Faser-Laser erfordert nur eine einzige Pump-Laserdiode und emittiert auf mehreren Emissionswellenlängen im sichtbaren und nah infraroten Bereich, umschaltbar oder gleichzeitig. Der Resonator dieses Lasers besteht aus einer dotierten Faser, einem Einkoppelspiegel (Eintritts-Resonatoreinheit), der an der Eintrittsseite der Faser angebracht ist, und der Austritts-Resonatoreinheit, die mit der Austrittsseite der Faser verbunden ist. Die Austritts-Resonatoreinheit besteht aus dem mit der Austrittsseite der Faser verbundenen zweiten Resonatorspiegel und einem im Abstand zu der Austrittsseite vorgesehenen dritten Resonatorspiegel. Der erste und der zweite Resonatorspiegel sind in dem Wellenlängenbereich mit der kleinsten Lichtverstärkung hochreflektierend und erlauben damit die bevorzugte Anregung von schwachen Emissionslinien. Mit einer praseodym- und ytterbium-dotierten ZBLAN-Faser, beispielweise, wird die Laser-Emission bei 491 nm angeregt. Der dritte Resonatorspiegel dient für die kontrollierte Erhöhung der Rückkopplung bei einem der anderen Übergänge, z. B. in dem Wellenlängenbereich 635 nm. Dies führt dazu, dass Laser-Licht gleichzeitig oder einzeln in mindestens zwei Wellenlängenbereichen erzeugt und geregelt wird. Bei dem in WO 01/99243 A1 beschriebenen Faser-Laser ist die erste oder Eintritts-Resonatoreinheit als wellenlängenselektiver Spiegel ausgebildet, der für die Wellenlänge der Pumplichtquelle durchlässig und für die übrigen Wellenlängen reflektierend ist. Der Spiegel der Eintritts-Resonatoreinheit ist an der Eintrittsseite der Faser direkt angebracht.

Alternativ bleibt der dritte Resonatorspiegel unverändert und die Veränderung der Rückkopplung erfolgt durch die Veränderung eines regelbaren Luftspalts zwischen der Austrittsseite der Faser und dem zweiten Resonatorspiegel. Die Erhöhung der Rückkopplung an der Austrittsseite der Faser führt meistens zu einem stärkeren Anstieg der Lichtemission in der rückwärtigen Richtung, d.h. aus der Eintrittsseite der Faser, und vermindert damit die Effizienz der Laser.

Ferner ist aus US 4,680,767 ein optischer Faser-Laser bekannt, bei dem die an einem Ende des Laserresonators angeordnete Resonatoreinheit dazu dient, aus den longitudinalen Moden des Laserresonators eine einzelne oder einige wenige Moden auszuwählen. Der Laser erzeugt somit eine möglichst schmalbandige Strahlung.

Aufgabe der Erfindung ist es, einen Faser-Laser zu schaffen, der besonders effizient Licht bei zwei, insbesondere aber bei drei oder mehr Farben gleichzeitig oder einzeln emittiert.

Die Lösung der Aufgabe erfolgt erfindungsgemäß durch die Merkmale des Anspruchs 1.

Der erfindungsgemäße Faser-Laser weist eine Faser zur Laserlichterzeugung auf. Die Faser weist eine Eintrittsseite und eine Austrittsseite auf, wobei über die Eintrittsseite insbesondere mit Hilfe einer Kollimationseinheit, Pumplicht, das vorzugsweise durch Diodenlaser erzeugt ist, in die Faser eingekoppelt wird. Erfindungsgemäß weist die Eintritts-Resonatoreinheit mindestens eine dielektrische Schicht bzw. einen dielektrischen Bereich auf, deren optische Dicke zum Festlegen des mindestens einen Emissionsbereichs variabel ist. Auf Grund der Variabilität der optischen Dicke dieser dielektrischen Schicht ist es möglich, den Emissionsbereich des erfindungsgemäßen Faser-Lasers zu verändern. möglich, den Emissionsbereich des erfindungsgemäßen Faser-Lasers zu verändern.

Die optische Dicke der dielektrischen Schicht bzw. des dielektrischen Bereichs kann beispielsweise dadurch verändert werden, dass es sich bei der Schicht um eine beispielsweise ein gasförmiges Medium aufweisende Schicht handelt und der Druck variiert wird. Die Veränderung des Druckes ändert die optische Dicke der Schicht. In diesem bevorzugtem Ausführungsbeispiel ist der dielektrische Bereich somit vorzugsweise als Kammer ausgebildet, in der ein gasförmiges Medium vorhanden ist. Die Kammer ist mit einer Druckregeleinrichtung verbunden, durch die, beispielsweise durch Zuführen oder Abführen von Gas, der Druck in der Kammer variiert werden kann. Ebenso ist es möglich, anstatt oder zusätzlich zu der Regelung des Drucks in der Kammer, die Art der eingeleiteten Gase bzw. Gasgemische zur Veränderung der optischen Dicke zu variieren. Zur Veränderung der optischen Dicke der Schicht bzw. des dielektrischen Bereichs kann somit die Zusammensetzung des Mediums verändert, ggf. vollständig ausgetauscht werden.

Ebenso kann die entsprechende dielektrische Schicht in einem elektrischen Feld angeordnet sein. Durch Variieren der Feldstärke ändert sich die optische Dicke der Schicht. Zur Veränderung der Feldstärke ist eine entsprechende Feldstärken-Regeleinrichtung vorgesehen. -

Besonders bevorzugt ist es, ein optisches Reflexionselement, wie einen Spiegel, vorzusehen, so dass die dielektrische Schicht, deren optische Dicke variiert werden soll, zwischen dem optischen Reflexionselement und der Eintrittsseite der Faser angeordnet ist. Ein Variieren der optischen Dicke kann hierbei durch Verschieben des optischen Reflexionselements erfolgen. Selbstverständlich sind die unterschiedlichen Verfahren zur Änderung der optischen Dicke der dielektrischen Schicht auch kombinierbar. Ggf. können auch weitere dielektrische Schichten mit fester oder variabler optischer Dicke vorgesehen sein. Die Verschiebung des optischen Reflexionselements erfolgt vorzugsweise zumindest teilweise in Längsrichtung der Faser.

Das an der Eintrittsseite vorgesehene Reflexionselement (vorzugsweise wellenlängenselektive dielektrische Spiegel) der Eintritts-Resonatoreinheit, ist erfindungsgemäß bei einer besonders bevorzugten Ausführungsform in einem Abstand zur Eintrittsseite angeordnet. Hierdurch entsteht ein Spalt, der insbesondere Teil eines mehrschichtigen dielektrischen Spiegelsystems ist. Die Dicke des Spalts wird vorzugsweise nicht viel größer als die Wellenlänge der Laser-Emission gewählt. Da vorzugsweise der Abstand zwischen dem Reflexionselement der Eintritts-Resonatoreinheit und der Eintrittsseite der Faser erfindungsgemäß veränderbar ist, kann die optische Dicke der Schicht bzw. die Breite des Spaltes geändert werden. Hieraus ergibt sich eine Veränderung des Reflexionsspektrums des Spiegelsystems. Durch die Veränderung des Reflexionsspektrums kann die Wellenlänge bzw. ein Wellenlängenbereich eingestellt werden, in dem die Eintritts-Resonatoreinheit hochreflektierend bzw. schwach reflektierend ist. Als Ergebnis wird die Lichtemission bei einer Veränderung des Spalts von einer Farbe in eine andere Farbe umschalten. Erhöht sich die Reflexion des Spiegels auf der Eintrittsseite der Faser, bedeutet dies, dass die Effizienz steigt, weil der Lichtfluss nun in Richtung der Auskopplung steigt. Es kann auch sein, dass bei der Veränderung der Spaltdicke noch einige weitere Farben angeregt werden können. Im Bereich des Farbenwechsels besteht auch die Möglichkeit, zwei oder mehr Farben gleichzeitig zu erzeugen und das Verhältnis der Lichtleistungen in diesen Wellenlängenbereichen einzustellen.

Anstatt einer erfindungsgemäß ausgebildeten Eintritts-Resonatoreinheit kann auch eine entsprechend ausgebildete Austritts-Resonatoreinheit vorgesehen sein. Die erfindungsgemäße Austritts-Resonatoreinheit weist somit ebenfalls zumindest eine dielektrische Schicht auf, deren optische Dicke variabel ist. Das Variieren der optischen Dicke dieser Schicht kann, wie vorstehend anhand der Eintritts-Resonatoreinheit beschrieben, erfolgen. Besonders bevorzugt ist es, sowohl eine erfindungsgemäße Eintritts-Resonatoreinheit als auch eine erfindungsgemäße Austritts-Resonatoreinheit vorzusehen. Hierdurch ist es möglich, mit Hilfe einer einfachen Resonatorkonfiguration vorzugsweise mehrere Spektralemissionen zu erzeugen.

Besonders bevorzugt ist es, das Reflexionselement der Ausstritts-Resonatoreinheit, bei dem es sich vorzugsweise um einen wellenlängenselektiven dielektrischen Spiegel handelt, derart auszubilden, dass es in einem Abstand zur Austrittsseitse der Faser angeordnet ist. Hierdurch entsteht ein Spalt, der Teil eines mehrschichtigen dielektrischen Spiegelsystems ist. Die Dicke des Spalts wird vorzugsweise nicht viel größer als die Wellenlänge der Laser-Emission gewählt. Da vorzugsweise der Abstand zwischen dem Reflexionselement der Austritts-Resonatoreinheit und der Austrittsseite der Faser erfindungsgemäß veränderbar ist, kann die Dicke der Schicht bzw. die Breite des Spaltes geändert werden. Ähnlich wie bei der Eintritts-Resonatoreinheit verändert sich damit die Reflexion. Mit einem speziell ausgewählten mehrschichtigen dielektrischen Spiegelsystem kann es z.B. zur Reduzierung des Reflexionskoeffizienten bei dem schwächsten oder zur Erhöhung des Reflexionskoeffizienten bei anderen Laserübergängen kommen. In diesem Fall kann ein anderer Übergang zur Laseremission angeregt werden.

Ferner können die Eintritts- und Austritts-Resonatoreinheiten noch weitere optische Elemente wie Spiegel, Linsen und Abstände (Spalte), enthalten. Ebenso können die Spalte beispielsweise zwischen der Austrittsseite der Faser und dem ersten Resonatorspiegel der Austritts-Resonatoreinheit statt mit Luft mit einem anderen Medium gefüllt werden, um die Dielektrizitätskonstante des Spaltmediums und somit das Reflexionsspektrum der Resonatoreinheit zu beeinflussen.

Vorzugsweise besteht die Eintritts-Resonatoreinheit aus einem Resonatorspiegel, der für das zu erzeugende Laserlicht in dem

Wellenlängenbereich mit der kleinsten Lichtverstärkung hochreflektierend ist, insbesondere einen Reflexionsgrad von 30% bis 100% aufweist; bevorzugt ist der Reflexionsgrad höher als 50% und besonderes bevorzugt höher als 75%. Vorzugsweise besteht die Austritts-Resonatoreinheit auch aus einem Resonatorspiegel, der für das zu erzeugende Laserlicht in dem Wellenlängenbereich mit der kleinsten Lichtverstärkung hochreflektierend ist, insbesondere einen Reflexionsgrad von 30% bis 100% aufweist, bevorzugt ist der Reflexionsgrad höher als 50% und besonderes bevorzugt höher als 75%. Zusätzlich kann dieser Resonatorspiegel für den Wellenlängenbereich des Pumplichtes hoch reflektierend sein. Bevorzugt ist der Reflexionsgrad für diesen Wellenlängenbereich größer als 50%, besonderes bevorzugt größer als 80%.

Vorzugsweise ist/sind der oder die Resonatorspiegel der Eintritts-Resonatoreinheit für den Wellenlängenbereich des Pumplichtes niedrig reflektierend. Bevorzugt ist der Reflexionskoeffizient kleiner als 50% und besonderes bevorzugt kleiner als 10%.

Der Spalt bzw. der Abstand zwischen dem Reflexionselement der ersten Resonatoreinheit und der Eintrittsseite der Faser ist vorzugsweise kleiner als 20 µm, bevorzugt kleiner als 5 µm und besonderes bevorzugt kleiner als 2 µm. Hierbei ist es besonderes bevorzugt, den Abstand einstellen zu können. Dies kann beispielsweise durch Verschieben des Reflexionselements der Eintritts-Resonatoreinheit und/oder der Faser geschehen. Durch die Dicke bzw. Breite des Spaltes ist die Wellenlänge bzw. der Wellenlängenbereich der Lichtemission des Faserlasers bestimmbar.

Das Reflexionselement der Austritts-Resonatoreinheit weist vorzugsweise einen Abstand bzw. Spalt zur Austrittsseite von weniger als 20 µm, insbesondere kleiner als 5 µm und besonderes bevorzugt kleiner als 2 µm auf. Hierbei ist es besonderes bevorzugt, den Abstand einstellen zu können. Dies kann beispielsweise durch Verschieben des Reflexionselements der Eintritts-Resonatoreinheit und/oder der Faser geschehen. Durch die Dicke bzw. Breite des Spaltes ist die Wellenlänge bzw. der Wellenlängenbereich der Lichtemission des Faserlasers bestimmbar.

Mindestens einer der beiden Spalte ist hierbei vorzugsweise derart steuerbar, dass das emittierte Laserlicht gleichzeitig oder einzeln in mindestens zwei Wellenlängenbereichen erzeugt werden kann. Ferner ist es durch das Verschieben einzelner Spiegel und/oder durch Ändern des Mediums in dem Spalt möglich, das Verhältnis der Lichtleistungen des emittierten Laserlichts in mindestens zwei Wellenlängenbereichen einzustellen. Besonderes bevorzugt ist es, die beiden Spalte derart kontrolliert zu verändern, dass das emittierte Laserlicht gleichzeitig oder einzeln in mindestens drei Wellenlängenbereichen erzeugt werden kann, wobei deren Lichtleistungen vorzugsweise ebenfalls einstellbar sind.

Bei einer bevorzugten Weiterbildung der Erfindung weist die Austritts-Resonatoreinheit eine Einkoppeloptik und einen zweiten Spiegel mit entsprechenden Abständen auf. Diese ermöglicht die Einkopplung der Lichtemission des Lasers in eine passive optische Faser. Durch die passive optische Faser kann das Licht sodann zu einer Anwendungsstelle weiter geführt werden. Die optische Einkoppeleinheit, z.B. eine Linse, fokussiert das an der Austrittsseite austretende Licht auf den zweiten Spiegel der Austritts-Resonatoreinheit, der sich auf der Eintrittsseite der passiven optischen Faser befindet. Dabei besteht die Möglichkeit der Steuerung des Emissionsspektrums durch die Verschiebung der optischen Einkoppeleinheit mit chromatischer Aberration und/oder des zweiten Spiegels.

Der zweite Spiegel der Austritts-Resonatoreinheit kann auch direkt auf der Eintrittsseite einer passiven optischen Faser aufgebracht werden. In diesem Fall ist es möglich, dass die Austritts-Resonatoreinheit aus nur einem, insbesondere ausschließlich aus dem zweiten Spiegel der Austritts-Resonatoreinheit besteht. Der Spalt zwischen diesem Resonatorspiegel und der Austrittsseite der aktiven Faser ist vorzugsweise wiederum kleiner als 20 µm, insbesondere kleiner als 5 µm und besonderes bevorzugt kleiner als 2 µm.

Bei den Resonatorspiegeln kann es sich vorzugsweise um mehrschichtige dielektrische Spiegel handeln. Ein möglicher Aufbau von dielektrischen Schichten ist in WO 01/99243 A1 anhand der Fign. 3a und 3b beschrieben. Die Eintrittsseite und/oder die Austrittsseite der aktiven Faser können zusätzlich mit einer oder mit mehreren dielektrischen Schichten beschichtet werden.

Das Verschieben einzelner Bauteile des erfindungsgemäßen Faser-Lasers, insbesondere der optischen Elemente, wie Spiegel, Linse oder Faser, erfolgt vorzugsweise piezoelektrisch und/ oder auf elektromagnetische Weise. Ferner ist es möglich, die Verschiebung durch mechanische Stellelemente vorzunehmen. Selbstverständlich ist auch die Kombination dieser Verschiebungen möglich.

Die Emissionsleistung der Faser-Laser kann mit Hilfe eines Regelsignals, das aus der Stärke der Emissionsleistung abgeleitet wird, gesteuert und geregelt werden. Die Regelung erfolgt durch Steuerung der Leistung der Pumplichtquelle und/oder der Position eines oder mehrerer optischer Elemente, also der Spiegel und/oder der Einkoppeleinheit. Insbesondere ist es möglich, aus der Stärke der gleichzeitig emittierten Wellenlängenbereiche unterschiedliche Regelsignale, insbesondere für einzelne optische Elemente, abzuleiten.

Vorteilhafte Weiterbildungen der Erfindung sind Gegenstand der Unteransprüche.

Nachfolgend wird die Erfindung anhand bevorzugter Ausführungsformen unter Bezugnahme auf die anliegenden Zeichnungen näher erläutert.

Es zeigen:
- Fig. 1: eine schematische Darstellung des prinzipiellen Aufbaus einer ersten bevorzugten Ausführungsform des Faser-Lasers,
- Fig. 2: eine schematische Darstellung des prinzipiellen Aufbaus einer zweiten bevorzugten Ausführungsform des Faser-Lasers mit Einkopplung seiner Lichtemission in eine passive optische Faser,
- Fig. 3: eine schematische Darstellung des prinzipiellen Aufbaus einer dritten bevorzugten Ausführungsform des Faser-Laser mit direkter Einkopplung seiner Lichtemission in die passive optische Faser und
- Fig. 4: eine schematische Darstellung des prinzipiellen Aufbaus einer vierten bevorzugten Ausführungsform des Faser-Laser mit einer Auskopplung der Lichtemission des Faser-Lasers aus der Eintrittsseite.

Die an der Eintrittsseite 18 und/oder an der Austrittsseite 22 der aktiven Faser 20 vorgesehenen Resonatoreinheiten bestehen beispielsweise beide nur jeweils aus einem Resonatorspiegel 14, 26. Der erste Resonatorspiegel 14 weist einen kontrollierbaren Abstand (Spalt) 16 zu der Eintrittsseite 18 der Faser auf, und/oder die zweite Resonatoreinheit 26 weist auf der Austrittsseite 22 auch einen kontrollierbaren Abstand (Spalt) 24 zu der Austrittsseite der Faser auf. Die Spalte sind bis zu 20 µm dick, einstell- und regelbar. Der erste Resonatorspiegel 14 und der zweite Resonatorspiegel 26 sind vorzugsweise für das zu erzeugende Laserlicht in dem Wellenlängenbereich mit der kleinsten Lichtverstärkung hochreflektierend und weisen insbesondere einen Reflexionsgrad von 30% - 100% auf. Zusätzlich können die Eintrittsseite 18 und/oder die Austrittsseite 22 der aktiven Faser 20 auch direkt mit dielektrischen Schichten beschichtet werden.

In einem voreingestellten Zustand (z.B. beide Abstände auf null gesetzt) werden optimale Bedingungen für die Anregung der Laser-Emission in dem Wellenlängenbereich mit der kleinsten Lichtverstärkung erreicht. Bei einer praseodym- und ytterbium-dotierten ZBLAN-Faser kann das z.B. der Bereich bei 491 nm sein. Durch die Verschiebung 30 des ersten Resonatorspiegels 14 und/oder der Eintrittsseite der Faser 18 wird die Spaltdicke 16 geändert. Der Spalt 16 (z.B. Luftspalt) zwischen dem Spiegel 14 und der Faserendfläche 18 ist ein Teil des mehrschichtigen dielektrischen Spiegelsystems das durch die Faser von einer Seite und durch das Spiegelsubstrat von der andere Seite eingegrenzt ist. Die Veränderung der Dicke mindestens einer der dielektrischen Schichten einschließlich des Spaltes führt zur Veränderung des resultierenden Reflexionskoeffizienten. Es kann z.B. höhere Lichtreflexion bei der Wellenlänge eines der stärkeren Laser-Übergänge erzeugt werden. Bei einer praseodym- und ytterbium-dotierten ZBLAN-Faser kann das z.B. der Übergang bei 635 nm sein. Als Ergebnis wird die Lichtemission bei einer Veränderung des Spalts von einer Farbe (z.B. 491 nm) in die andere Farbe (z.B. 635 nm) umschalten. Da sich die Reflexion des Spiegels auf der Eintrittsseite der Faser erhöht, bedeutet das, dass die Effizienz steigt, weil der Lichtfluss nun in Richtung der Auskopplung steigt. Es kann auch sein, dass bei der Veränderung der Spaltdicke noch einige weitere Farben (z.B. 605 nm) angeregt sein können. Im Bereich des Farbenwechsels besteht auch die Möglichkeit, mindestens zwei Farben gleichzeitig zu erzeugen und das Verhältnis der Lichtleistungen in diesen Wellenlängenbereichen einzustellen.

Durch die Verschiebung 32 des zweiten Resonatorspiegels und/oder der Austrittsseite der Faser wird die Spaltdicke 24 geändert. Ähnlich wie beim ersten Resonatorspiegel verändert sich damit die Reflexion der zweiten Resonatoreinheit. Mit einem speziell ausgewählten mehrschichtigen dielektrischen Spiegelsystem kann es z.B. zur Reduzierung des Reflexionskoeffizienten bei dem schwächsten oder zur Erhöhung des Reflexionskoeffizienten bei anderen Laserübergängen kommen. In diesem Fall besteht die Möglichkeit, dass ein anderer Übergang angeregt wird. Bei einem praseodym- und ytterbium-dotierten ZBLAN-Faser kann das z.B. einer der Übergänge mit Emission bei 520, 535, 605, 635, 717, 1300 nm sein.

Kontrollierte Veränderung 30, 32 eines oder beider Spalte 16, 24 gibt die Möglichkeit mindestens drei Farben gleichzeitig zu erzeugen und das Verhältnis der Lichtleistungen in diesen Wellenlängenbereichen einzustellen. Die kontrollierte Veränderung der beiden Spalte kann piezoelektrisch, auf elektromagnetische Weise oder mit Hilfe eines mechanischen Stellelementes erfolgen.

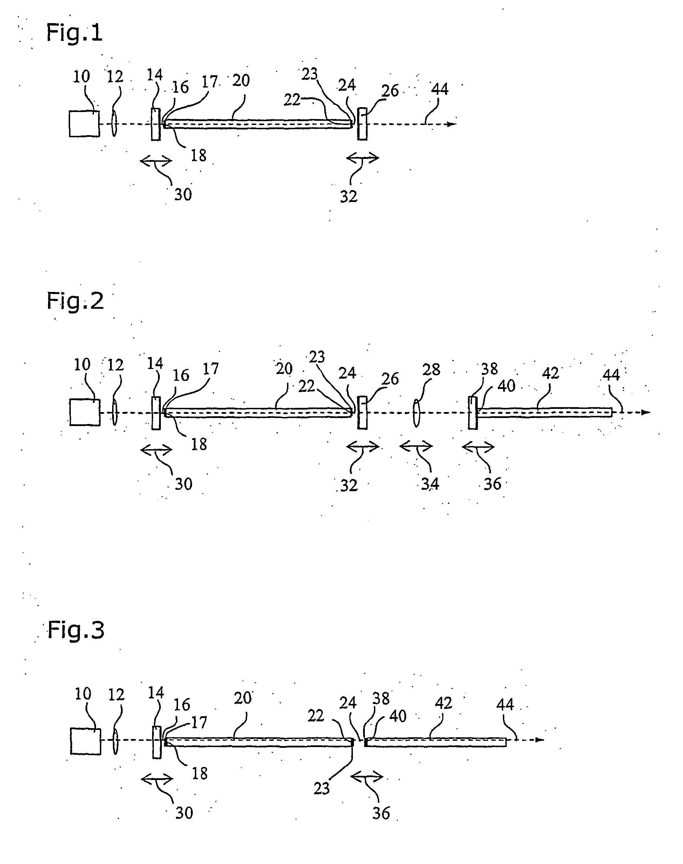

Eine Erweiterung der zweiten Resonatoreinheit um einen weiteren Spiegel 38 (Fig. 2), und Einkoppeloptik 28, mit entsprechenden Abständen, ermöglicht die direkte Einkopplung der Lichtemission des Lasers in eine passive optische Faser 42 und die Weiterführung dieses Lichtes mit Hilfe dieser passiven Faser 42 zur Anwendungsstelle 44. Die optische Einkoppeleinheit 28 fokussiert das an der Austrittsseite 22 austretende Licht auf den zweiten Spiegel 38 der zweiten Resonatoreinheit, der sich auf der Eintrittsseite der passiven optischen Faser 42 befindet. Dabei besteht die Möglichkeit der Steuerung des Emissionsspektrums durch die Verschiebung 34 der optischen Einkoppeleinheit 28 mit chromatischer Aberration und/oder des zweiten Spiegels 38 der zweiten Resonatoreinheit.

Der zweite Spiegel 38 der zweiten Resonatoreinheit, der direkt auf der Eintrittsseite 40 einer passiven optischen Faser 42 aufgebracht ist, kann auch mit einem bis zu 20 µm dicken Spalt 24 direkt an der Austrittsseite 22 der aktiven Faser angebracht werden (Fig. 3) um den ersten Spiegel 26 der zweiten Resonatoreinheit zu ersetzen.

Die Austrittsseite 22 und/oder Eintrittsseite 18 der aktiven Faser 20 kann zusätzlich mit einer oder mit mehreren dielektrischen Schichten direkt beschichtet sein 17, 23.

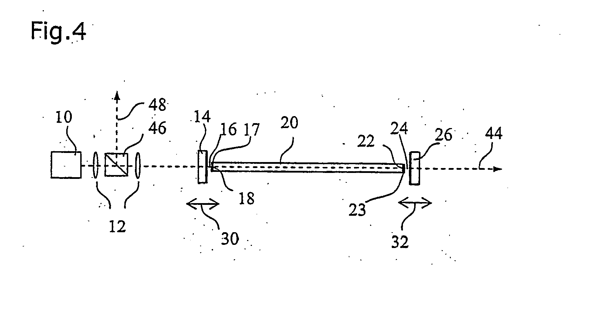

Die Lichtemission des Faser-Lasers in einem oder mehreren Wellenlängenbereichen kann auch aus der Eintrittsseite 18 der Faser mit Hilfe eine geeigneten optischen Koppeleinheit 12, z.B. mit Hilfe eines Strahlteilers 46, ausgekoppelt 48 werden (Fig.4).

Die Emissionsleistung der Faser-Laser kann mit Hilfe eines Regelsignals, das aus der Stärke der Emissionsleistung abgeleitet wird, gesteuert und geregelt werden. Die Emissionsleistung zur Erzeugung des Regelsignals kann durch die Ablenkung eines Teils des Ausgangsstrahls 44 bzw. 48 oder durch Benutzung eines nicht verwendeten Ausgangs 44 bzw. 48 zur Verfügung gestellt werden. Die Regelung erfolgt durch Steuerung der Leistung der Pumplichtquelle 10 und/oder der Position eines oder mehrerer optischer Elemente, also der Spiegel 14, 26, 38 und/oder der Einkoppeleinheit 28.

Bei mehreren gleichzeitig emittierten Wellenlängen in verschiedenen Spektralbereichen werden unterschiedliche Regelsignale erzeugt. Die unterschiedlichen Regelsignale können in verschiedenen Weisen abgeleitet werden:
1. Durch die räumliche Trennung der emittierten Wellenlängen, z.B. mit Hilfe eines Prismas.
2. Durch die spektrale Trennung der emittierten Wellenlängen z.B. mit Hilfe von Farbfiltern.
3. Durch die Trennung der Signale unterschiedlicher Polarisation.
4. Durch die Trennung der Frequenzen des Rauschens der emittierten Wellenlängen.

Das Maximum des Laserrauschens liegt im Festkörperlaser bei der Frequenz der Relaxationsschwingungen. Da sich die Resonatorverluste in verschiedenen Wellenlängenbereichen sich unterscheiden, unterscheiden sich auch die Frequenzen der Relaxationsschwingungen für verschiedene emittierte Wellenlängen. Dies ermöglicht es, mit einem elektronischen Bandpassfilter die Regelsignale zu trennen.

Die Einführung einer Stromregelung, die ohne merkliche Zeitverzogerung reagiert und den Diodenlaserstrom proportional zum Negativen der Ableitung der Laserausgangsleistung moduliert, unterdrückt das Rauschen bei den Frequenzen der Relaxationsschwingungen nahezu vollständig. Die Einführung einer Stromregelung der Pumplaserdiode proportional zur Abweichung der Laserausgangsleistung von einem Sollwert und zum Integral dieser Abweichung reduziert langzeitige Leistungsschwankungen. Eine zusätzliche Temperaturstabilisierung der Regelung ist ggf. erforderlich.

### Ausführungsbeispiel

Der erfindungsgemäße Faser-Laser weist eine Pumpquelle 10 auf, bei der es sich vorzugsweise um eine Laserdiode handelt. Das von der Pumpquelle abgegebene Licht wird durch eine Kollimationseinheit 12 durch die Eintrittsseite 18 in die aktive Faser 20 eingekoppelt. Vor der Eintrittseite ist ein erster Resonatorspiegel 14 vorgesehen, der einen Abstand (Spalt) 16 zu der Eintrittsseite (18) der Faser aufweist. Auf der Austrittsseite 22 ist der zweite Resonatorspiegel (26) vorgesehen, der auch einen Abstand (Spalt) 24 zu der Austrittsseite 22 der Faser aufweist. Die beiden Abstände sind regelbar bzw. einstellbar. Die Verschiebung 30, 32 bzw. Einstellung der Spiegel 14, 26 und/oder der Faserendflächen 18, 22 erfolgt piezoelektrisch, auf elektromagnetische Weise oder mit Hilfe eines mechanischen Stellelementes.

Das in die Faser 20 eingekoppelte Pumplaserlicht regt die in der Faser 20 vorgesehenen Praseodym- und Ytterbium- Dotierungen an, so dass diese Lichtverstärkung in den gewünschten Wellenlängenbereichen gewährleisten. Bei ausreichender Lichtverstärkung werden die Resonatorverluste ausgeglichen, und Laseremission wird erzeugt.

Die Steuerung des Emissionsspektrums erfolgt durch die spektrale Veränderung der Resonatorverluste. Die Resonatorverluste werden insbesondere durch die Reflexion der Resonatorspiegel bestimmt. Die Spiegel 14, 26 bestehen aus mehrschichtigen dielektrischen Schichtsystemen, die auf ein Spiegelsubstrat und/oder auf die Faser aufgedampft sind. Die Spalte 16, 24 zwischen den Spiegeln 14, 26 und den Faserendflächen 18, 22 sind Teile der mehrschichtigen dielektrischen Spiegelsysteme, die durch die Faser von der einen Seite und durch die Spiegelsubstrate von der anderen Seite eingegrenzt sind. Die Veränderung der Dicke einer dieser Schichten, insbesondere des Spaltes führt zur Veränderung des resultierenden Reflexionskoeffizienten.

In einem voreingestellten Zustand werden die beiden Spalte beispielsweise auf null gesetzt. Dabei müssen die optimalen Bedingungen für die Anregung der Laser-Emission in dem einzusetzenden Wellenlängenbereich mit der kleinsten Lichtverstärkung erreicht werden. Bei einer praseodym- und ytterbium-dotierten ZBLAN-Faser kann das z.B. der Bereich bei 491 nm sein.

In diesem Fall ist der Gesamtreflexionskoeffizient der Resonatoreinheit auf der Eintrittseite 14, 16, 17, 18 bei der Wellenlänge 491 nm sehr groß, vorzugsweise größer als 90%, besonders bevorzugt größer als 98%. Dagegen muss die Reflexion bei der Wellenlänge eines der stärkeren Laser-Übergänge, z.B. bei 635 nm klein sein, vorzugsweise kleiner als 30%, besonders bevorzugt kleiner als 2%. Der Reflexionskoeffizient bei der Wellenlänge 520 nm muss Werte aus dem Bereich von 40% bis 99% aufweisen.

Der Gesamtreflexionskoeffizient der Resonatoreinheit auf der Austrittsseite 22, 23, 24, 26 muss bei der Wellenlänge 491 nm vorzugsweise Werte aus dem Bereich von 70% bis 99% aufweisen. Der Reflexionskoeffizient bei der Wellenlänge 635 nm muss vorzugsweise Werte aus dem Bereich von 0% bis 10% aufweisen. Der Reflexionskoeffizient bei der Wellenlänge 520 nm muss vorzugsweise Werte aus dem Bereich von 1% bis 80% aufweisen.

Die Verschiebungen 30, 32 der Resonatorspiegel, die Abstände erzeugen, werden den Gesamtreflexionskoeffizienten in der folgenden Weise ändern: Die Verschiebung 30 des ersten Resonatorspiegel 14 führt zu einem höheren Reflexionskoeffizienten bei der Wellenlänge 635 nm; besonderes bevorzugt sind Werte aus dem Bereich von 1% bis 30%. Der Reflexionskoeffizient bei den Wellenlängen 491 nm und 520 nm bleibt dagegen vorzugsweise unverändert. Die Verschiebung 32 des zweiten Resonatorspiegels 26 führt zu einem vorzugsweise unveränderten Reflexionskoeffizienten bei der Wellenlänge 635 nm, aber zu einem sinkendem Reflexionskoeffizienten bei der Wellenlänge 491 nm (vorzugsweise 50% bis 80%) und/oder zu einem steigenden Reflexionskoeffizienten bei der Wellenlänge 520 nm (vorzugsweise 30% bis 80%).

Der Vergrößerung der Spaltdicke 16 zwischen dem ersten Resonatorspiegel 14 und der Eintrittsseite der Faser 18 von 0 auf z.B. 160 nm führt zur Reduzierung der Resonatorverluste bei der Wellenlänge 635 nm und zum Umschalten der Lichtemission in diesen Wellenlängenbereich. Die Vergrößerung der Spaltdicke 24 zwischen dem zweiten Resonatorspiegel 26 und der Austrittsseite der Faser 22 von 0 auf z.B. 130 nm führt zur Reduzierung der Resonatorverluste bei der Wellenlänge 520 nm und zum Umschalten der Lichtemission in diesen Wellenlängenbereich. Auf diese Weise ist es möglich, Laser-Licht in mindestens drei Wellenlängenbereichen zu erzeugen. Im Bereich des Farbenwechsels besteht auch die Möglichkeit, mindestens drei Farben gleichzeitig zu erzeugen und das Verhältnis der Lichtleistungen in diesen Wellenlängenbereichen einzustellen.

Die mehrschichtigen dielektrischen Schichten der Resonatoreinheit auf der Eintrittseite 14, 16, 17, 18 und/oder auf der Austrittseite 22, 23, 24, 26 können zwei mehr- oder einschichtig Teilsysteme aufweisen, wobei ein Teilsystem 17 bzw 23 direkt an die Eintritts- 18 bzw. Austrittsseite 22 der Faser und das andere auf ein Spiegelsubstrat 14, 26 angebracht ist.

## Patentansprüche

1. Faser-Laser, mit
einer Faser (20) zur Laserlichterzeugung mit einer Eintrittsseite (18) und einer Austrittsseite (22),
einer Pumplichtquelle (10) zur Erzeugung von über die Eintrittsseite (18) in die Faser (20) einkoppelbarem Pumplicht, und
an der Eintrittsseite (18) und an der Austrittsseite (22) der Faser (20) vorgesehenen Resonatoreinheiten, zur Rückkopplung von dem an der Eintritts- und/ oder Austrittsseite austretenden Licht, zumindest eines Wellenlängenbereichs, in die Faser (20),
wobei die Eintritts-Resonatoreinheit und die Austritts-Resonatoreinheit mindestens eine dielektrische Schicht (16, 24) mit variabler optischer Dicke zum Festlegen des mindestens einen Emissionsbereichs aufweist,
wobei zwischen dem Reflexionselement (14) der Eintritts-Resonatoreinheit und der Eintrittsseite (18) der Faser (20) und zwischen dem Reflexionselement (26) der Austritts-Resonatoreinheit und der Austrittsseite (22) der Faser (20) ein bis zu 20 µm dicker Spalt (16 bzw. 24) vorgesehen ist, der einstell- und/oder regelbar ist.

2. Faser-Laser nach Anspruch 1, **dadurch gekennzeichnet, dass** die Eintritts-Resonatoreinheit und/ oder die Austritts-Resonatoreinheit zum Variieren der optischen Dicke der dielektrischen Schicht (16, 24) ein verschiebbares optisches Reflexionselement (14, 26) aufweist.

3. Faser-Laser nach Anspruch 2, **dadurch gekennzeichnet, dass** das optische Reflexionselement (14, 26) der Eintritts-Resonatoreinheit und / oder der Austritts-Resonatoreinheit in einem veränderbaren Abstand zur Eintrittsseite (18) bzw. zur Ausrittsseite (22) angeordnet ist.

4. Faser-Laser nach einem der Ansprüche 1 - 3, **dadurch gekennzeichnet, dass** die Eintritts-Resonatoreinheit und/ oder die Austritts-Resonatoreinheit zum Variieren der optischen Dicke der dielektrischen Schicht (16, 24) ein gasförmiges Medium aufweist, dessen Druck veränderbar ist.

5. Faser-Laser nach einem der Ansprüche 1 - 4, **dadurch gekennzeichnet, dass** die Eintritts-Resonatoreinheit und/ oder die Austritts-Resonatoreinheit zum Variieren der optischen Dichte der dielektrischen Schicht (16, 24) diese in einem veränderbaren elektrischem Feld angeordnet ist.

6. Faser-Laser nach einem der Ansprüche 1 -5, **dadurch gekennzeichnet, dass** die Eintritts-Resonatoreinheit und / oder die Austritts-Resonatoreinheit für das zu erzeugende Laserlicht in dem Wellenlängenbereich mit der kleinsten Lichtverstärkung hochreflektierend ist, insbesondere einen Reflexionsgrad von 30% - 100% aufweist.

7. Faser-Laser nach einem der Ansprüche 1 - 6, **dadurch gekennzeichnet, dass** die Eintritts-Resonatoreinheit für den Wellenlängenbereich des Pumplichtes einen niedrigen Reflexionskoeffizienten, insbesondere unter 50%, besonders bevorzugt unter 10%, aufweist.

8. Faser-Laser nach einem der Ansprüche 1 - 7, **dadurch gekennzeichnet, dass** der Spalt (16 bzw. 24) kleiner als 5 µm und besonderes bevorzugt kleiner als 2 µm ist.

9. Faser-Laser nach einem der Ansprüche 1 - 8, **dadurch gekennzeichnet, dass** der Spalt (16) und/oder (24) derart steuerbar ist, dass Laser-Licht gleichzeitig oder einzeln in mindestens zwei Wellenlängenbereichen erzeugt wird.

10. Faser-Laser nach einem der Ansprüche 1 - 9, **dadurch gekennzeichnet, dass** die Austritts-Resonatoreinheit zwei Spiegel aufweist, wobei der erste Spiegel (26) für das zu erzeugende Laserlicht in dem Wellenlängenbereich mit der kleinsten Lichtverstärkung hochreflektierend ist, insbesondere einen Reflexionsgrad von 30% - 100% aufweist, und der zweite Spiegel (38) zur Rückkopplung von an der Austrittsseite (22) austretendem Licht, zumindest eines Wellenlängenbereichs in die Faser (20), geeignet ist.

11. Faser-Laser nach Anspruch 10, **dadurch gekennzeichnet, dass** der zweite Spiegel (38) der Austritts-Resonatoreinheit zumindest für jenen weiteren Wellenlängenbereich hochreflektierend ist, für den der erste Spiegel (26) der Austritts-Resonatoreinheit im Wesentlichen transparent ist, so dass Laserlicht in diesem weiteren Wellenlängenbereich erzeugt wird.

12. Faser-Laser nach Anspruch 10 oder 11, **dadurch gekennzeichnet, dass** die Austritts-Resonatoreinheit eine optische Koppeleinheit (28) aufweist, die das an der Austrittsseite (22) austretende Licht auf den zweiten Resonatorspiegel (38) der Austritts-Resonatoreinheit fokussiert.

13. Faser-Laser nach Anspruch 12, **dadurch gekennzeichnet, dass** die optische Koppeleinheit (28) derart ausgebildet ist, dass sie zur Steuerung des Emissionsspektrums dient.

14. Faser-Laser nach Anspruch 12 oder 13, **dadurch gekennzeichnet, dass** die optische Koppeleinheit (28) eine asphärische Linse mit chromatischer Aberration ist.

15. Faser-Laser nach einem der Ansprüche 12 - 14, **dadurch gekennzeichnet, dass** die optische Koppeleinheit (28) zur Steuerung des Emissionsspektrums verschiebbar ist.

16. Faser-Laser nach einem der Ansprüche 12 - 15, **dadurch gekennzeichnet, dass** der zweite Spiegel (38) der Austritts-Resonatoreinheit zur Steuerung des Emissionsspektrums verschiebbar ist.

17. Faser-Laser nach einem der Ansprüche 10 - 16, **dadurch gekennzeichnet, dass** der zweite Spiegel (38) der Austritts-Resonatoreinheit mit einer Eintrittsseite (40) einer passiven optischen Faser (42) verbunden ist.

18. Faser-Laser nach einem der Ansprüche 1 - 17, **dadurch gekennzeichnet, dass** die Austritts-Resonatoreinheit nur einen Spiegel (38) aufweist, der vorzugsweise direkt mit der Eintrittsseite (40) einer passiven optischen Faser (42) verbunden ist und einen bis zu 20 µm, vorzugsweise bis zu 3 µm dicken Spalt (24) mit der Austrittsseite (22) bildet.

19. Faser-Laser nach einem der Ansprüche 1 - 18, **dadurch gekennzeichnet, dass** die Eintrittsseite (18) und/oder die Austrittsseite (22) der aktiven Faser (20) mit einer oder mit mehreren dielektrischen Schichten beschichtet ist (17, 23).

20. Faser-Laser nach einem der Ansprüche 1 - 19, **dadurch gekennzeichnet, dass** die Spiegel mehrschichtige dielektrische Spiegel sind.

21. Faser-Laser nach einem der Ansprüche 1 - 20, **dadurch gekennzeichnet, dass** auf der Eintrittsseite (18) und/oder Austrittsseite (22) ein- oder mehrschichtige dielektrische Systeme angebracht sind.

22. Faser-Laser nach einem der Ansprüche 1 - 21, **dadurch gekennzeichnet, dass** die Verschiebung (30, 32, 34, 36) bzw. Einstellung eines optisches Elements oder mehrerer optischen Elemente, Spiegel (14, 26, 38) und/oder der Einkoppeleinheit (28) piezoelektrisch und/ oder auf elektromagnetische Weise und/ oder mit Hilfe eines mechanischen Stellelementes erfolgt.

23. Verfahren zum Betreiben eines Faser-Lasers nach einem der Ansprüche 1-22, bei welchem aus der Stärke der Emissionsleistung der Faser-Lasers ein Regelsignal erzeugt wird, das durch Ansteuern der Leistung der Pumplichtquelle (10) und/oder der Position eines oder mehrerer optischer Elemente aus dem Spiegel (14, 26, 38) und der Einkoppeleinheit (28) die Emissionsleistung des Faser-Lasers einstellt und/oder regelt.

24. Verfahren nach Anspruch 23, bei welchem aus der Stärke der gleichzeitig emittierten Wellenlängenbereiche unterschiedliche Regelsignale erzeugt werden.

25. Verfahren nach Anspruch 24, bei welchem die unterschiedlichen Regelsignale durch die räumliche und/oder spektrale Trennung und/oder die Trennung der Polarisationssignale und/oder der Frequenzen des Rauschens der emittierten Wellenlängenbereiche erzeugt werden.

26. Verfahren nach einem der Ansprüche 23 - 25, bei welchem aus der Stärke der Emissionsleistung unterschiedliche Regelsignale erzeugt werden, die durch Ansteuern der Leistung der Pumplichtquelle (10) und/oder der Position eines oder mehrerer optischer Elemente aus dem Spiegel (14, 26, 38) und der Einkoppeleinheit (28), die Verteilung der Emissionsleistung in verschiedenen Wellenlängenbereichen des Faser-Lasers einstellt und/oder regelt.

27. Verfahren nach einem der Ansprüche 23 - 26, bei welchem die Lichtemission
des Faser-Lasers in einem oder mehreren Wellenlängenbereichen aus der Eintrittsseite (18) der Faser mit Hilfe einer geeigneten optischen Koppeleinheit (12) ausgekoppelt wird.

## Claims

1. A fiber laser comprising
a fiber (20) for generating laser light, having an entrance side (18) and an exit side (22),
a pumped light source (10) for generating pumped light adapted to be coupled into the fiber (20) through the entrance side (18), and
resonator units provided at the entrance side (18) and at the exit side (22) of the fiber (20) for feeding the light of at least one wavelength range exiting at the entrance and/or the exit side back into the fiber (20),
the entrance resonator unit and the exit resonator unit comprising at least one dielectric layer (16, 24) of variable optical thickness to set the at least one emission range, and
wherein an adjustable and/or variable gap (16 or 24) of up to 20 µm in thickness is provided between the reflection element (14) of the entrance resonator unit and the entrance side (18) of the fiber (20) and between the reflection element (26) of the exit resonator unit and the exit end (22) of the fiber (20).

2. The fiber laser of claim 1, wherein the entrance resonator unit and/or the exit resonator unit comprise a displaceable optical reflecting element (14, 26) to vary the optical thickness of the dielectric layer (16, 24).

3. The fiber laser of claim 2, wherein the optical reflecting element (14, 26) of the entrance resonator unit and/or the exit resonator unit is arranged at a variable distance from the entrance side (18) or the exit side (22), respectively.

4. The fiber laser of one of claims 1-3, wherein the entrance resonator unit and/or the exit resonator unit comprise a pressure-variable gaseous medium to vary the optical thickness of the dielectric layer (16, 24).

5. The fiber laser of one of claims 1-4, wherein, in the entrance resonator unit and/or the exit resonator unit, the dielectric layer (16, 24) is arranged in a variable electric field to vary the optical thickness of the dielectric layer.

6. The fiber laser of one of claims 1-5, wherein the entrance resonator unit and/or the exit resonator unit are, for the laser light to be generated, highly reflective in the wavelength range with the least light amplification, especially having a reflection factor from 30% to 100%.

7. The fiber laser of one of claims 1-6, wherein the entrance resonator unit has a low reflection factor, especially below 50%, particularly preferred below 10%, for the wavelength range of the pumped light.

8. The fiber laser of one of claims 1-7, wherein said gap (16 or 24) is less than 5 µm and particularly preferred less than 2 µm.

9. The fiber laser of one of claims 1-8, wherein the gap (16) and/or (24) may be controlled such that laser light is generated simultaneously or individually in at least two wavelength ranges.

10. The fiber laser of one of claims 1-9, wherein the exit resonator unit comprises two mirrors, the first mirror (26) being highly reflective for the laser light to be generated in the wavelength range with the least light amplification, especially having a reflection factor from 30% - 100%, and the second mirror (38) is suitable for feeding light of at least one wavelength range exiting at the exit side (22) back into the fiber (20).

11. The fiber laser of claim 10, wherein the second mirror (38) of the exit resonator unit is highly reflective at least for the other wavelength range for which the first mirror (26) of the exit resonator unit is substantially transparent so that laser light is generated in this other wavelength range.

12. The fiber laser of claim 10 or 11, wherein the exit resonator unit comprises an optical coupler unit (28) focusing the light exiting from the exit side (22) on the second resonator mirror (38).

13. The fiber laser of claim 12, wherein the optical coupler unit (28) is configured such that it serves to control the emission spectrum.

14. The fiber laser of claim 12 or 13, wherein the optical coupler unit (28) is an aspheric lens with chromatic aberration.

15. The fiber laser of one of claims 12-14, wherein the optical coupler unit (28) is adapted to be displaced for the control of the emission spectrum.

16. The fiber laser of one of claims 12-15, wherein the second mirror (38) of the exit resonator unit is adapted to be displaced for the control of the emission spectrum.

17. The fiber laser of one of claims 10-16, wherein the second mirror (38) of the exit resonator unit is connected with an entrance side (40) of a passive optical fiber (42).

18. The fiber laser of one of claims 1-17, wherein the exit resonator unit comprises only one mirror (38) which is preferably directly connected with the entrance side (40) of a passive optical fiber (42) and forms a gap (24) with the exit side (22) that is up to 20 µm, preferably up to 3 µm, wide.

19. The fiber laser of one of claims 1-18, wherein the entrance side (18) and/or the exit side (22) of the active fiber (20) is coated with one or a plurality of dielectric layers (17, 23).

20. The fiber laser of one of claims 1-19, wherein the mirrors are multi-layered dielectric mirrors.

21. The fiber laser of one of claims 1-20, wherein single- and multi-layered dielectric systems are arranged at the entrance side (18) and/or the exit side (22).

22. The fiber laser of one of claims 1-21, wherein the displacement (30, 32, 34, 36) or the adjustment of an optical element and/or a plurality of optical elements, mirrors (14, 26, 88) and/or the input coupler unit (28) is effected piezo-electrically and/or electromagnetically and/or by means of a mechanical actuating means.

23. A method for operating a fiber laser of one of claims 1-22, wherein a regulating signal is generated from the intensity of the emission power, which adjusts and/or regulates the emission power of the fiber laser by driving the power of the pumping light source (10) and/or the position of one or a plurality of optical elements among the mirrors (14, 26, 38) and the input coupler unit (28).

24. The method of claim 23, wherein different regulating signals are generated from the intensity of the simultaneously emitted wavelength ranges.

25. The method of claim 24, wherein the different regulating signals are generated by a spatial and/or spectral separation and/or a separation of the polarization signals and/or of the noise frequencies of the emitted wavelength ranges.

26. The method of one of claims 23-25, wherein different regulating signals are generated from the intensity of the emission power, which adjust and/or regulate the distribution of the emission power in different wavelength ranges of the fiber laser by driving the power of the pumping light source (10) and/or the position of one or a plurality of optical elements among the mirrors (14, 26, 38) and the input coupler unit (28).

27. The method of one of claims 23-26, wherein the light emission of the fiber laser in one or a plurality of wavelength ranges is coupled out from the entrance side (18) of the fiber using a suitable optical coupler unit (12).

## Revendications

1. Laser à fibre comprenant
une fibre (20) pour la génération de lumière laser, comprenant un côté d'entrée (18) et un côté de sortie (22),
une source de lumière pompée (10) pour la génération de lumière pompée propre à être couplée dans la fibre (20) par le côté d'entrée (18), et
des unités résonatrices prévues au côté d'entrée (18) et au côté de sortie (22) de la fibre (20) pour retourner dans la fibre (20) la lumière d'au moins une gamme de longueurs d'ondes, qui est sorti au côté d'entrée et/ou de sortie,
ladite unité résonatrice côté entrée et ladite unité résonatrice côté sortie comprenant au moins une couche diélectrique (16, 24) à épaisseur optique variable pour définir ladite au moins une gamme d'émission,
une fente (16, 24, respectivement) ajustable et/ou variable, d'une largeur allant jusqu'à 20 µm, étant prévue entre l'élément réflecteur (14) de ladite unité résonatrice côté entrée et le côté d'entrée (18) de la fibre (20) et entre l'élément réflecteur (26) de ladite unité résonatrice côté sortie et le côté de sortie (22) de la fibre (20).

2. Laser à fibre selon la revendication 1, **caractérisé en ce que** ladite unité résonatrice côté entrée et/ou ladite unité résonatrice côté sortie comprennent un élément réflecteur optique (14, 26) déplaçable pour varier l'épaisseur optique de la couche diélectrique (16, 24).

3. Laser à fibre selon la revendication 2, **caractérisé en ce que** ledit élément réflecteur optique (14, 26) de ladite unité résonatrice côté entrée et/ou ladite unité résonatrice côté sortie est disposé à une distance variable du côté d'entrée (18) ou du côté de sortie (22).

4. Laser à fibre selon l'une quelconque des revendications 1 - 3, **caractérisé en ce que** ladite unité résonatrice côté entrée et/ou ladite unité résonatrice côté sortie comprennent un médium gazeux variable en pression, pour varier l'épaisseur optique de la couche diélectrique (16, 24).

5. Laser à fibre selon l'une quelconque des revendications 1 - 4, **caractérisé en ce que** ladite unité résonatrice côté entrée et/ou ladite unité résonatrice côté sortie sont situées dans un champ électrique variable, pour varier l'épaisseur optique de ladite couche diélectrique (16, 24).

6. Laser à fibre selon l'une quelconque des revendications 1 - 5, **caractérisé en ce que** ladite unité résonatrice côté entrée et/ou ladite unité résonatrice côté sortie sont fortement réflectifs pour la lumière à générer dans la gamme des longueurs d'ondes avec l'amplification de lumière minimale, notamment ayant un dégrée de réflexion de 30% - 100%.

7. Laser à fibre selon l'une quelconque des revendications 1 - 6, **caractérisé en ce que** ladite unité résonatrice côté entrée a un coefficient de réflexion bas pour la gamme des longueurs d'ondes de la lumière pompée, notamment inférieur à 50%, particulièrement inférieur à 10%.

8. Laser à fibre selon l'une quelconque des revendications 1 - 7, **caractérisé en ce que** ladite fente (16, 24 resp.) est inférieure à 5 µm et, de préférence, est inférieure à 2 µm.

9. Laser à fibre selon l'une quelconque des revendications 1 - 8, **caractérisé en ce que** ladite fente (16) et/ou (24) est contrôlable de manière que la lumière laser soit générée simultanément pu individuellement dans au moins deux gammes des longueurs d'ondes.

10. Laser à fibre selon l'une quelconque des revendications 1 - 9, **caractérisé en ce que** ladite unité résonatrice côté sortie comprend deux miroirs, ledit premier miroir (26) étant fortement réflectif pour la lumière à générer dans la gamme des longueurs d'ondes avec l'amplification de lumière minimale, notamment ayant un dégrée de réflexion de 30% - 100%, et le deuxième miroir (38) étant propre à retourner dans la fibre (20) la lumière d'au moins une gamme des longueurs d'ondes sortant du côté de sortie (22).

11. Laser à fibre selon la revendication 10, **caractérisé en ce que** ledit deuxième miroir (38) de ladite unité résonatrice côté sortie est fortement réflective au moins pour cette autre gamme des longueurs d'ondes pour laquelle le premier miroir (26) de ladite unité résonatrice côté sortie est sensiblement transparent, de façon que de lumière laser est générée dans cette autre gamme des longueurs d'ondes.

12. Laser à fibre selon la revendication 10 ou 11, **caractérisé en ce que** ladite unité résonatrice côté sortie comprend une unité de couplage optique (28) focalisant la lumière sortant audit côté de sortie (22) sur ledit deuxième miroir résonateur (38) de ladite unité résonatrice côté sortie.

13. Laser à fibre selon la revendication 12, **caractérisé en ce que** l'unité de couplage optique (28) est formée de sorte qu'elle sert à contrôler le spectre d'émission.

14. Laser à fibre selon la revendication 12 ou 13, **caractérisé en ce que** ladite unité de couplage optique (28) est une lentille asphérique à aberration chromatique.

15. Laser à fibre selon l'une quelconque des revendications 12 - 14, **caractérisé en ce que** ladite unité de couplage optique (28) est déplaçable pour contrôler ledit spectre d'émission.

16. Laser à fibre selon l'une quelconque des revendications 12 - 15, **caractérisé en ce que** le deuxième miroir (38) de ladite unité résonatrice côté sortie est déplaçable pour contrôler le spectre d'émission.

17. Laser à fibre selon l'une quelconque des revendications 10 - 16, **caractérisé en ce que** le deuxième miroir (38) de ladite unité résonatrice côté sortie est connecté à un côté d'entrée (40) d'une fibre passive optique (42).

18. Laser à fibre selon l'une quelconque des revendications 1 - 17, **caractérisé en ce que** ladite unité résonatrice côté sortie comprend un seul miroir (38) qui est, de préférence, directement connecté au côté d'entrée (40) d'une fibre optique passive (42) et forme une fente (24) avec ledit côté de sortie (22) d'une largeur allant jusqu'à 20 µm, de préférence jusqu'à 3 µm.

19. Laser à fibre selon l'une quelconque des revendications 1 - 18, **caractérisé en ce que** le côté d'entrée (18) et/ou le côté de sortie (22) de ladite fibre (20) est recouverte d'une ou de plusieurs couches diélectriques (17, 23).

20. Laser à fibre selon l'une quelconque des revendications 1 - 19, **caractérisé en ce que** les miroirs sont des miroirs diélectriques multicouches.

21. Laser à fibre selon l'une quelconque des revendications 1 - 20, **caractérisé en ce que** des systèmes diélectriques à une ou plusieurs couches sont disposés sur le côté d'entrée (18) et/ou le côté de sortie (22).

22. Laser à fibre selon l'une quelconque des revendications 1 - 21, **caractérisé en ce que** le déplacement (30, 32, 34, 36) ou l'ajustement d'un élément optique ou de plusieurs éléments optiques, miroirs (14, 26, 38) et/ou de l'unité de couplage (28) se passe de manière piézoélectrique et/ou électromagnétique et/ou à l'aide d'un élément actionneur mécanique.

23. Procédé d'opération d'un laser à fibre selon l'une quelconque des revendications 1 - 22, dans lequel un signal de réglage est généré de la magnitude de la puissance d'émission dudit laser à fibre, ledit signal ajustant et/ou réglant la puissance d'émission dudit laser à fibre en commandant la puissance de la source de lumière pompée (10) et/ou de la position d'un ou plusieurs élément(s) optique(s) du miroir (14, 26, 38) et de ladite unité de couplage (28).

24. Procédé selon la revendication 23, dans lequel des signaux de réglage différents sont générés à partir de la magnitude des gammes des longueurs d'ondes émises simultanément.

25. Procédé selon la revendication 24, dans lequel les signaux de réglage différents sont générés par la séparation spatiale et/ou spectrale et(ou la séparation des signaux de polarisation et/ou des fréquences de bruit des gammes des longueurs d'ondes émises.

26. Procédé selon l'une quelconque des revendications 23 - 25, dans lequel des signaux de réglage différents sont générés à partir de la magnitude de la puissance d'émission, ledit signal ajustant et/ou réglant la distribution de la puissance d'émission dudit laser à fibre dans les gammes des longueurs d'ondes différentes en commandant la puissance de la source de lumière pompée (10) et/ou de la position d'un ou plusieurs élément(s) optique(s) du miroir (14, 26, 38) et de ladite unité de couplage (28).

27. Procédé selon l'une quelconque des revendications 23 - 26, dans lequel l'émission de lumière dudit laser à fibre dans une ou plusieurs gammes des longueurs d'ondes est couplée du côté d'entrée (18) de la fibre à l'aide une unité de couplage optique (12) appropriée.
